# EUROPÄISCHE PATENTANMELDUNG

(11) **EP 1 302 108 A2**
(43) Veröffentlichungstag der Anmeldung: **16.04.2003**
(21) Anmeldenummer: 02022080.2
(22) Anmeldetag: 02.10.2002
(51) Int. Cl.: A01N 37/16, C11D 3/39

(54) **Verfahren zum desinfizierenden Waschen mit Persäuren**

(30) Priorität: 11.10.2001 DE 10150403
(71) Anmelder: Ecolab GmbH & CO. OHG, 40589 Düsseldorf (DE)
(72) Erfinder: Merz, Thomas, Dr., 40723 Hilden (DE); Everts, Frank, 41472 Neuss (DE)

(57) **Zusammenfassung**

Verfahren zum desinfizierenden Waschen, bei dem in einem Verfahrensschritt die Wäsche mit einer wäßrigen Lösung, enthaltend organische Persäure und Fettsäure, behandelt wird, wobei der pH-Wert der genannten Lösung im sauren Bereich liegt und in einem sich direkt anschließenden Verfahrensschritt die Wäsche mit alkalischen Mitteln behandelt wird.

## Beschreibung

Die vorliegende Erfindung betrifft ein Waschverfahren, das sich insbesondere zur Durchführung in gewerblichen Wäschereien eignet und darauf beruht, daß in einem ersten Verfahrensschritt die Wäsche mit einer Persäure und Fettsäure enthaltenden wäßrigen Lösung behandelt wird, wobei der pH-Wert im sauren Bereich liegt und in einem direkt darauffolgenden Verfahrensschritt die Wäsche mit alkalischen Mitteln behandelt wird.
In gewerblichen Wäschereien werden in der Regel Mehrkammerwaschmaschinen eingesetzt, die im Gegenstrom arbeitende Waschstraßen enthalten. Diese Waschstraßen umfassen meist mehrere hintereinander geschaltete Kammern, wobei das Waschgut nacheinander in eine Vorwaschstufe, einer Waschstufe, einer Spülstufe, einer Nachbehandlungsstufe und einer Entwässerungsstufe behandelt wird. Je nach Waschprogramm wird in den verschiedenen Kammern desinfizierend und/oder bleichend wirkendes Waschhilfsmittel zugegeben. Aktivsauerstoffhaltige Mittel, wie beispielsweise organische Persäuren, sind dafür bekannt, daß sie bei der Reinigung von Textilien gute Bleicheigenschaften sowie gute antimikrobielle Eigenschaften aufweisen. Der übliche Verlauf des pH-Wertes in derartigen Mehrkammerwaschmaschinen in gewerblichen Wäschereien sieht vor, daß der pH-Wert zunächst im Alkalischen liegt. Mit anderen Worten, die Entfernung des Großteils der Verschmutzungen wird in der Klarwäsche mit Waschalkalien durchgeführt. Nachdem der größte Anteil der Verunreinigungen von den Textilien in den alkalisch eingestellten Waschkammern entfernt worden ist, wird in der Regel eine Ausspülung der Waschalkalien aus den Textilien durchgeführt. Dieser Prozess wird in der Regel in den Spülstufen oder in den Nachbehandlungsstufen durchgeführt. Aufgrund des hohen Wasserverbrauchs, der erforderlich ist, um die den Textilien anhaftenden Waschalkalien zu entfernen, ist es von Vorteil zur Ausspülung angesäuertes Wasser zu verwenden. Dadurch ist eine wesentliche Einsparung an Wasser möglich. So wird beispielsweise in der deutschen Anmeldung DE 4439570 A1 bereits darauf hingewiesen, daß es günstig ist, Wäschenachbehandlungsmittel auf saure pH-Werte einzustellen, um alkalische Waschmittelrückstände auf den Textilien zu neutralisieren und ihre Ausspülung zu erreichen. Dieser Hinweis ist in der genannten Anmeldung auf Seite 1, Zeilen 15 und 16 zu finden. In der genannten Anmeldung DE 4439570 A1 wird ein Wäschenachbehandlungsmittel auf QAV-Basis offenbart, das neben den üblichen positiven Eigenschaften von Wäschenachbehandlungsmitteln einen zusätzlichen absäuernden Effekt erzielt, so daß das Ausspülen von Waschalkalien aus Textilien erleichtert wird. In vielen weiteren Anmeldungen, wie beispielsweise auch in der DE/OS 3719906 wird darauf hingewiesen, daß üblicherweise in Wäschereibetrieben eingesetzte Waschmittel vergleichsweise hohe Anteile an Waschalkalien enthalten. Es kann dementsprechend als allgemeine Meinung der Fachwelt angesehen werden, daß insbesondere in gewerblichen Wäschereien der Waschvorgang am effektivsten durchgeführt werden kann, wenn in der Hauptsache alkalisch gewaschen wird und danach die Waschalkalien mit Wasser, ggf. mit angesäuertem Wasser, wieder entfernt werden.

Demzufolge stellte sich die vorliegende Erfindung die Aufgabe, diese eingefahrene Meinung von Industrie und gewerblichen Wäschereien erneut zu überprüfen, und dabei auch neue Persäuren in den Tests heranzuziehen. Eine Aufgabe der vorliegenden Erfindung war es demzufolge, neue Wege bei der Reinigung von Textilien zu gehen und den klassischen Ansatz "Alkalisch Waschen und danach neutral oder sauer Nachbehandeln bzw. Ausspülen" in Frage zu stellen.

Überraschenderweise kam man nach umfangreichen Versuchen zu dem Ergebnis, daß die erfindungsgemäßen Verfahren gleiche oder bessere Ergebnisse insbesondere hinsichtlich der desinfizierenden Eigenschaften lieferten, als es nach bisheriger Praxis gegeben war.

Gegenstand der vorliegenden Erfindung ist dementsprechend ein Verfahren zum desinfizierenden Waschen, bei dem in einem Verfahrensschritt die Wäsche mit einer wäßrigen Lösung, enthaltend organische Persäure und Fettsäure, über einen Zeitraum von 10 bis 30 Minuten bei einer Temperatur zwischen 30 und 60 °C behandelt wird, wobei der pH-Wert der genannten Lösung im sauren Bereich liegt und in einem sich direkt anschließenden Verfahrensschritt die Wäsche mit alkalischen Mitteln behandelt wird. Es ist hierbei bevorzugt, daß die genannte saure Lösung weitere Inhaltsstoffe, ausgewählt aus den Hydrotropen, den tensidischen Verbindungen sowie komplexbildenden Komponenten enthält.
Besonders bevorzugt ist es dabei, daß zur Herstellung der genannten sauren Lösung eine Mischung hergestellt wird aus einer wäßrigen Lösung, deren pH Wert unter 6 liegt und die eine organische Persäure sowie Fettsäure enthält, und einem Waschmittel, dessen pH Wert in 1%iger wäßriger Lösung zwischen 9 und 13 liegt und Inhaltsstoffe, ausgewählt aus den Hydrotropen, den tensidischen Verbindungen sowie komplexbildenden Komponenten und gegebenenfalls Fettsäuren enthält.
Vorzugsweise liegt in dem erfindungsgemäßen Verfahren der pH-Wert der Lösung bei der genannten sauren Behandlung zwischen 4 und 6, wobei beim sich direkt anschließenden Verfahrensschritt der pH-Wert der dann vorliegenden Lösung zwischen 7 und 9 beträgt.

In einer bevorzugten Ausführungsform des erfindungsgemäßen Verfahrens wird die Menge an erforderlichen alkalischen Mitteln in dem genannten sich anschließenden Verfahrensschritt über pH-Wert-Erfassung automatisch kontrolliert und gesteuert.

Eine bevorzugte Ausführungsform des erfindungsgemäßen Verfahrens liegt vor, wenn die genannte saure Lösung erst abgelassen und danach die Wäsche in dem sich direkt anschließenden Verfahrensschritt mit alkalischen Mitteln behandelt wird.

Andererseits kann es im Rahmen des erfindungsgemäßen Verfahrens ebenfalls bevorzugt sein, daß die genannte saure Lösung direkt mit den in dem sich anschließenden Verfahrensschritt eingesetzten alkalischen Mittel versetzt wird.

Schließlich ist eine weitere Ausführungsform des erfindungsgemäßen Verfahrens bevorzugt, bei der die Wäsche durch eine kontinuierlich arbeitende Mehrkammer-Waschmaschine fortbewegt wird, wobei der genannte saure Verfahrensschritt in einer Kammer erfolgt, die getrennt ist von einer unmittelbar folgenden Kammer, in der der genannte alkalische Verfahrensschritt erfolgt.

Es zeigt sich außerdem in der praktischen Anwendung, daß das erfindungsgemäße Verfahren auch zur Wäsche von üblicherweise gegenüber oxidativen Desinfektionsmitteln und/oder Temperatur empfindlichen Textilien, wie Wolle, Seide-, Viskose-, Polyacrylfasern, Polyamid, Acetat, Lyocell geeignet ist.

Bei dem erfindungsgemäßen Verfahren ist es bevorzugt, daß die genannte organische Persäure ausgewählt ist aus
a) den Persäuren oder Salzen von Persäuren mit der allgemeinen Formel I

   R²-O₂C-(CH₂)ₓ-CO₃H (I)

   worin R² Wasserstoff oder eine Alkylgruppe von 1 bis 4 Kohlenstoffatomen und x eine Zahl von 1 bis 4 ist, und/oder
b) den Phthalimido-Percarbonsäuren (II), worin der Percarbonsäure-Anteil 1 bis 18 Kohlenstoffatome enthält, und/oder
c) den Persäuren mit der allgemeinen Formel (III)

   R¹- CO₃H (III)

   worin R¹ eine Alkyl- oder Alkenylgruppe mit 1 bis 18 Kohlenstoffatomen ist.

Besonders bevorzugt ist es Persäuren zu verwenden für die gilt, daß
a) als Persäuren gemäß der allgemeinen Formel (I) Persäuren enthalten sind, in denen R² Wasserstoff oder eine Methylgruppe ist, und/oder
b) als Persäuren Phthalimido-Persäuren enthalten sind, in denen der Percarbonsäure-Anteil 1 bis 8 Kohlenstoffatome enthält, und/oder
c) als Persäuren gemäß der allgemeinen Formel (III) Persäuren mit einer Alkyl- oder Alkenylgruppe mit 1 bis 12 Kohlenstoffatomen enthalten sind.

In dem erfindungsgemäßen Verfahren ist weiterhin bevorzugt, daß der Persäure-Anteil in der genannten sauren Lösung, bezogen auf die gesamte saure Lösung 0,0001 bis 2 Gew.% beträgt.
Es ist ebenfalls bevorzugt, daß in der genannten sauren Lösung bezogen auf die gesamte saure Lösung zusätzlich 0,0005 bis 2 Gew.% Wasserstoffperoxid vorliegen.

Wie bereits ausgeführt, können in der genannten sauren Lösung gemäß der bevorzugten Ausführungsformen des erfindungsgemäßen Verfahrens unter anderem weitere Komponenten, ausgewählt aus den Fettsäuren, Hydrotropen, tensidischen Verbindungen, komplexbildenden Komponenten enthalten sein. Diese können bereits in der sauren Persäure-Lösung enthalten sein oder aber durch Zugabe eines alkalischen Waschmittels erst in die auch nach Zugabe des Waschmittels noch saure Lösung gelangen.

In Bezug auf die dabei genannten, bevorzugt enthaltenen Komponenten gibt es welche, die besonders bevorzugt sind.

Beispielsweise ist es bevorzugt, daß in dem erfindungsgemäßen Verfahren unter Fettsäuren solche mit 8 bis 12 Kohlenstoffatomen und besonders bevorzugt Octansäure zu verstehen sind.

Weiterhin ist bevorzugt, daß das genannte Hydrotrop ausgewählt ist aus den Gruppen der anionischen Tenside, besonders bevorzugt aus den Sulfonaten/Sulfonsäuren und insbesondere aus Cumol-, Xylol-, Octyl-, Naphthyl- und Alkylbenzolsulfonaten/Sulfonsäuren, wobei im letzten Fall die Alkylgruppe zwischen 6 und 16 Kohlenstoffatomen beinhaltet.

Als genannte tensidische Komponente sind vorzugsweise Verbindungen zu verstehen, die ausgewählt sind aus den Gruppen der anionischen, kationischen, nichtionischen, amphoteren Tenside, Eiweißhydrolysate z. B. Lamepontypen, der Alkylaminoxide, der Silikonverbindungen und der Phosphorsäureester und deren Salzen.
Als anionisches Tensid können beliebige, auf dem Gebiet der Wasch- und Reinigungsmittel übliche anionische Tenside eingesetzt werden, wie z. B. C₈-C₁₈-Alkylsulfate, C₈-C₁₈-Alkylethersulfate, C₈-C₁₈-Alkansulfonate, C₈-C₁₈-α-Olefinsulfonate, sulfonierte C₈-C₁₈-Fettsäuren, C₈-C₁₈-Alkylbenzolsulfonate, Sulfonbernsteinsäuremomo- und -di-C₁-C₁₂-Alkylester, C₈-C₁₈-Alkylpolyglykolethercarboxylate, C₈-C₁₈-N-Acyltauride, C₈-Cis-N-Sarkosinate, C₈-C₁₈-Alkylisethionate sowie Gemische der voranstehenden.
Als Aminoxid ist vorzugsweise Trialkylaminoxid mit einer 8 bis 20 KohlenstoffAtome enthaltenden Alkylgruppe und zwei Alkylgruppen mit einer geringeren Anzahl an Kohlenstoffatomen in der Alkylkette, wobei die beiden kürzeren Alkylgruppen gleich oder verschieden sein können, wobei besonders bevorzugt das Aminoxidderivat Talgfett-bis-(2-hydroxyethyl-)-aminoxid, Oleyl-bis-(2-hydroxyethyl) -aminoxid, Kokos-bis-(2-hydroxyethyl-)-aminoxid, Tetradecyldimethyl-aminoxid und/oder Alkyldimethyl-aminoxid, die 12 bis 18 Kohlenstoffatome in der Alkylkette aufweisen, ist, enthalten.
Besonders bevorzugt sind Alkylpolyglukoside, die üblicherweise durch Kondensation von Fettalkoholen mit Glukose oder Polyglukose großtechnisch zugänglich und in verschiedenen Varianten im Handel erhältlich sind. Beispiele von Alkylpolyglukosiden, die sich für den erfindungsgemäßen Einsatz besonders gut eignen, sind die Produkte Glukopon® 600 der Firma Henkel und Triton® BG10 der Firma Röhm & Haas.
Weitere bevorzugte nichtionische Tenside sind alkoxylierte Alkylalkohole mit 8 bis 22 Kohlenstoffatomen in der Alkylkette befindet, wobei insbesondere wenigstens eine Verbindung aus den Gruppen der gemischten Ethoxylate/Propoxylate von verzweigten oder unverzweigten Alkylalkoholen mit 8 bis 22 Kohlenstoffatomen in der Alkylkette und der endgruppenverschlossenen Ethoxylate von verzweigten oder unverzweigten Alkylalkoholen mit 8 bis 22 Kohlenstoffatomen in der Alkylkette enthalten ist, und ganz besonders bevorzugt wenigstens eine Verbindung aus den Gruppen ethoxylierter und propoxylierter Alkylalkohole mit 12 bis 22 Kohlenstoffatomen im Alkylteil, der Butylether ethoxylierter Alkylalkohole mit 12 bis 22 Kohlenstoffatomen im Alkyteil und Methylether ethoxylierter Alkylalkohole mit 12 bis 22 Kohlenstoffatomen im Alkylteil enthalten ist, wobei im speziellen Fall Butylether und Methylether des ethoxylierten 2-Octyl-1-dodecanols enthalten sind. Nichtionische Tenside, die zur Herstellung der erfindunggemäßen Formulierungen besondes gut geeignet sind, sind beispielsweise Plurafac® LF 403, Plurafac® 431 der Firma BASF sowie Dehypon® LT 104 und Dehypon® G 2084 der Firma Henkel.

Vorzugsweise werden als Phosphorsäureester in der erfindungsgemäß zu verwendenden Desinfektionskomponente Phosphorsäureesterverbindungen eingesetzt, worunter sich vorzugsweise zumindest ein Salz eines Phosphorsäurepartialesters befindet, wobei besonders bevorzugt wenigstens ein Alkalisalz eines Phosphorsäurepartialesters von alkoxyliertem Alkylphenol vorliegt.

Bei den Phosphorsäureestern handelt es sich um tensidische Substanzen, die sich vorzugsweise von langkettigen aliphatischen oder araliphatischen Alkoholen ableiten. Als besonders geeignet haben sich die Salze der Phosphorsäurepartialester und hier insbesondere die von alkoxylierten Alkylphenolen erwiesen. Vorzugsweise werden als Alkalisalze die Natrium- und Kaliumsalze verwendet, von denen wiederum die Kaliumsalze besonders bevorzugt werden. Tensidisch wirksame Phosphorsäurepartialester, wie sie bevorzugt erfindungsgemäß verwendet werden, sind im Handel erhältlich. Ein Beispiel eines erfindungsgemäß besonders gut brauchbaren Wirkstoffs dieser Art ist das Produkt Triton® H 66 (Röhm & Haas).

Wenn bei dem erfindungsgemäßen Verfahren die Sprache auf Komponenten mit komplexbildenden Eigenschaften kommt, sind hierbei Verbindungen gemeint, die ausgewählt sind aus Nitrilotriessigsäure, Ethylendiamintetraessigsäure, Methylglycindiessigsäure, Gluconsäure, Zitronensäure, Dicarboxymethyl-L-glutaminsäure, Serindiessigsäure, Imidosuccinsäure, und der Gruppe der Polycarbonsäuren und Phosphonsäuren sowie jeweils deren Salzen.

Als Polycarbonsäuren kommen beispielsweise Polyacrylsäuren und Copolymere aus Maleinsäureanhydrid und Acrylsäure sowie die Natriumsalze dieser Polymersäuren in Betracht. Handelsübliche Produkte sind z. B. Sokalan® CP 5 und PA 30 von BASF, Alcosperse® 175 und 177 von Alco, LMW® 45 N und SPO2 ND von Norsohaas. Zu den geeigneten nativen Polymeren gehören beispielsweise oxidierte Stärke (z. B. DE 42 28 786) und Polyaminosäuren wie Polyglutaminsäure oder Polyasparaginsäure, z. B. der Firmen Cygnus, Bayer, Rohm & Haas, Rhöne-Poulenc oder SRCHEM.

Als Phosphonsäuren kommen beispielsweise 1-Hydroxyethan-1,1-diphosphonsäure, Diethylentriaminpentamethylenphosphonsäure oder Ethylendiamintetramethylenphosphonsäure sowie jeweils deren Alkalisalze in Frage.

Für den Fall, daß im erfindungsgemäßen Verfahren die genannte saure Lösung erst nach Zugabe eines alkalischen Waschmittels vorliegt, ist es bevorzugt, wenn dieses Waschmittel übliche Alkalitätsspender, wie beispielsweise Natriumhydroxid, Kaliumhydroxid, Carbonate, Silikate oder andere enthält.

### Beispiele

Chemothermische Wäschedesinfektionsverfahren stellen normalerweise eine Kombination aus physikalischen (Temperatur, Mechanik des Waschprozesses) und chemischen Einflussfaktoren (Waschkraft des Waschmittels, Desinfektionskomponente) dar.
Aus Sicht des bisherigen Stands der Technik wurde der Desinfektionsschritt im alkalischen Bereich durchgeführt. Trotz Zugabe von Peressigsäure oder anderen Persäuren lag der pH-Wert immer noch bei pH>7. Da bekanntermaßen ein alkalischer pH-Wert eher unterstützende Wirkung auf die desinfizierenden Eigenschaften einer Lösung mit sich bringt, war im Vorfeld nicht zu erwarten, daß ein pH-Wechsel in den sauren Bereich ähnlich gute oder bessere Ergebnisse mit sich bringen würde.
Umso überraschender waren die Ergebnisse, die im folgenden Beispiel vorgestellt werden. Im vorliegenden Beispiel wurde die desinfizierende Wirksamkeit eines chemothermischen Wäschedesinfektionsverfahrens mit einer sauren Lösung gemäß dem erfindungsgemäßen Verfahren untersucht.
Die untersuchte saure Lösung enthielt folgende Komponenten:

**Tabelle 1:**

| Zusammensetzung der untersuchten sauren Lösung | |
|---|---|
| Inhaltsstoffe | Anteil [Gew.-%.%] |
| Peressigsäure | 0.02 |
| Caprylsäure | 0,016 |
| Na-Octylsulfonat | 0,02 |
| Hydroxyethan-1,1-diphosphonsäure | 0,01 |
| C14-15 Tettalkoholethoxylat (7EO) | 0,095 |
| Palmkern-Fettsäure | 0,055 |
| C8-10 Alkylpolyglycosid | 0,01 |
| Nitrilotriacetat | 0,01 |
| Trikaliumcitrat | 0,01 |
| Kaliumcarbonat calciniert | 0,05 |
| Kaliumhydroxid | 0,02 |
| Kaliumsilikat | 0,01 |
| Maleinsäure-Acrylsäure-Copolymer-Na | 0,006 |

Neben den genannten Stoffen liegen im Gleichgewicht noch Essigsäure und Wasserstoffperoxid sowie gegebenenfalls geringe Mengen an Aufheller- oder Parfümstoffen (unter 0,005 Gew.%) in der sauren Lösung vor. Der Rest auf 100 Gew.% ist Wasser.
Die Prüfung der mikrobiologischen Wirksamkeit erfolgte in Anlehnung an die DGHM-Methodik (Hygiene, Medizin, 23. Jahrgang 1998/Heft 4). Bei dieser Methode wird die Wirksamkeit des Verfahrens unter Praxisbedingungen in einer Waschmaschine und in Gegenwart blutkontaminierter Wäsche geprüft. Die Waschversuche erfolgten in der Versuchswäscherei der Firma Henkel-Hygiene GmbH in Düsseldorf in einer dampfbeheizten Trommel-Waschmaschine der Firma Frista. Als Waschgut wurden 7,5 kg vorgewaschene, desinfizierte und getrocknete Küchentücher verwendet. Das Flottenverhältnis betrug 1 : 4.
Für die Untersuchungen wurden verschiedene Prüfkeime eingesetzt:
Versuch 1 (V 1): Enterococcus faecium (DSM 2146)
Versuch 2 (V 2): Candida albicans (DSM 1386)
Versuch 3 (V 3): Staphylococcus aureus DSM 799
Versuch 4 (V 4): Mycobacterium terrae DSM 43227
Versuch 5 (V 5): Escherichia coli DSM 11250
Die Impfsuspension wurde durch Abschwemmen von zehn Platten mit defibreniertem Schafblut (oxoid) und anschließender Filtration durch Glaswolle gewonnen.
Zur Vorbereitung der Untersuchungen wurden 2 x 40 getrocknete, 1 x 1 cm große autoklavierte Keimträger aus Standard-Baumwollgewebe/DIN 53919 (WSK-Testgewebe GmbH, Krefeld) für 15 Minuten in 10 ml Bakterien/Blutsuspension eingelegt und vollständig benetzt. Bei der Bestimmung des Keimgehaltes des, zur Anschmutzung verwendeten Gemisches, wurden folgende Werte ermittelt:
1,80 x 10¹⁰ KBE/ml Enterococcus faecium (V 1)
8,60 x 10⁸ KBE/ml Candida albicans (V 2)
5,3 x 10⁹ KBE/ml Staphylo coccus aureus (V 3)
1,39 x 10⁹ KBE/ml Mycobacterium terrae (V 4)
1,42 x 10¹⁰ KBE/ml Escherichia coli (V 5)

Die kontaminierten Keimträger wurden in offenen Petri-Schalen während drei Stunden bei 37 °C getrocknet. Am Versuchstag wurden jeweils zehn der präparierten Keimträger in Säckchen (25 x 25 cm) aus Standard-Baumwollgewebe eingebunden und für die Waschversuche benutzt.
Die Versuche erfolgten unter den beschriebenen Bedingungen in der beschriebenen Maschine. Der Balastwäsche wurden Säckchen mit keimhaltigen Trägern und zur Kontrolle ein weiteres Säckchen mit zuvor nicht kontaminierten Keimträgern beigegeben. Ferner wurden als zusätzliche Belastung dem Waschgut unmittelbar vor Beginn des Waschganges nochmals 12,5 ml defibriniertes Schafblut pro kg Trockenwäsche hinzugefügt.
Nach Abschluss des Desinfektionsgangs und vor Einlaufen des Spülwassers wurden die Säckchen mit sterilen Handschuhen entnommen und unmittelbar an der Maschine in Duran-Schraubverschlussflaschen mit jeweils 150 ml inaktivierender (3 % Tween® 80, 0,5 % Natriumthiosulfat, 0,3 % Lecitin, 0,1 % Histidin) Brain-Heart-Bouillion (TLH-Thio-BHB) überführt. In analoger Weise wurde auch mit den nicht kontaminierten Kontrollkeimträgern verfahren.
Im Labor wurden zehn der zuvor kontaminierten Keimträger einzeln in jeweils 5 ml TLH-Thio-BHB überführt und zehn Minuten bei 300 UpM (Umdrehungen pro Minute) geschüttelt. Danach wurde jeweils ein Keimträger in jeweils eine sterile Petriflasche gegeben und mit jeweils 25 ml BHA (Brain-Heart-Agar) überschichtet (Gussverfahren).
Von der übrigen Schüttelflüssigkeit wurde ein weiterer ml zur quantitativen Keimzahlbestimmung entnommen, in einer Verdünnungsreihe (physiologische Kochsalzlösung 0,85 %) verdünnt und die jeweiligen Verdünnungsstufen in analoger Weise im Gussverfahren untersucht.
Weitere sechs der zuvor nicht kontaminierten Keimträger wurde einzeln in jeweils 10 ml (TLH-Thio-BHB) überführt und 21 Tage bei 37 °C bebrütet.
Danach wurde von jeder Kultur ein aliquot zum Nachweis des Testkeims Enterococcus faecium bzw. zum Nachweis des Testkeims Escherichia coli überimpft.
Zur Ermittlung des Bezugswertes für die Bestimmung der quantitativen Keimreduktion diente die sogenannte Transportkontrolle. Dabei handelte es sich um drei Keimträger, die zur extern gelegenen Wäscherei mitgenommen, aber unbehandelt wieder mit ins Labor zurückgebracht wurden. Diese wurden in insgesamt 10 ml BHB ausgeschüttelt. Danach erfolgte eine Keimzahlbestimmung aus 2 x 1 ml der Schüttelflüssigkeit (Doppelansatz) in der beschriebenen Weise.
Zur Bestimmung der lebend Zellzahlen wurden die ausplattierten Agar-Platten mindestens 48 - 72 Stunden bei 36,5 °C inkubiert. Für die Auswertung wurden Platten mit Koloniezahlen zwischen 0 und 300 KBE herangezogen. Unter Berücksichtigung des Verdünnungsfaktors wurde die Keimzahl pro ml Schüttelflüssigkeit errechnet. Nach der Bestimmung des arithmetischen Mittels aus den Keimzahlen der fünf parallelen Schüttelflüssigkeiten wurde die Wirksamkeit des chemothermischen Waschverfahrens durch Berechnung des Reduktionsfaktors ermittelt. Die Ergebnisse der mikrobiziden Wirksamkeit der erfindungsgemäßen Waschkombinationen gegenüber Enterococcus faecium, Candida albicans, Staphylococcus aureus, Escherichia coli und Mycobacterium terrae in einem erfindungsgemäßen Verfahren entsprechend der chemothermischen Wäschedesinfektion sind in den folgenden Tabellen zusammenfassend dargestellt.

**Tabelle 2:**

| Ergebnisse der chemothermischen Wäschedesinfektion in Anlehnung an die ausführlich beschriebene DGHM-Methode mit der in Tabelle 1 beschriebenen sauren Lösung nach 15 Minuten Einwirkzeit bei 15 °C | | | |
|---|---|---|---|
| Testkeim | Kontrollwerte zur Ermittlung der RF-Werte | Durchschnittlicher RF-Wert aus 10 Mess-Werten | Ergebnisse der 6 mitgewaschenen verimpften Keimträger nach 21-tägiger Inkubation |
| V1: Enterococcus faecium DSM 2146 | 8,13 | > 7,43 | Ohne Befund (kein Wachstum) |
| V2: Candida albicans DSM 1386 | 6,78 | > 6,08 | Ohne Befund (kein Wachstum) |
| V3: Staphylococcus aureus DSM 799 | 8,14 | > 7,44 | Ohne Befund (kein Wachstum) |
| V4: Mycobacterium terrae DSM 43227 | 7,36 | > 6,6 | Ohne Befund (kein Wachstum) |
| V5: Escherichia coli DSM 11250 | 6,51 | > 5,81 | Ohne Befund (kein Wachstum) |
| RF-Werte = Keimreduktion in LOG-Stufen | | | |

Zusammenfassend kann gesagt werden, daß alle der genannten Kulturen im Test für die genannten Keime nach der Direktverimpfung der Testträger kein Wachstum zeigten. Außerdem wurden unter den geprüften Testparametern die Bedingungen der DGHM für ein wirksames Wäschedesinfektionsverfahren gegenüber allen genannten Testkeimen erreicht. Dabei ist besonders bemerkenswert, daß die Wirksamkeit im Waschversuch unter einer hohen Blutbelastung geprüft wurde. Durch den Eisengehalt des Hämoglobins und die Katalase-Aktivität des Blutes ist üblicherweise mit einer starken Wirkstoffzehrung zu rechnen. Trotzdem konnten die nach DGHM geprüften Testkeime unter den beschiebenen Bedingungen bei einer Anwendungstemperatur von mindestens 40 °C bei einer Einwirkzeit von mindestens 15 Minuten nicht mehr nachgewiesen werden. Aufgrund dieser erschwerten Prüfbedingungen kann man das erfindungsgemäße Verfahren für sehr effektiv und sicher in der Anwendung bezeichnen.

## Patentansprüche

1. Verfahren zum desinfizierenden Waschen, bei dem in einem Verfahrensschritt die Wäsche mit einer wäßrigen Lösung, enthaltend organische Persäure und Fettsäure, über einen Zeitraum von 10 bis 30 Minuten bei einer Temperatur zwischen 30 und 60 °C behandelt wird, **dadurch gekennzeichnet, daß** der pH-Wert der genannten Lösung im sauren Bereich liegt und in einem sich direkt anschließenden Verfahrensschritt die Wäsche mit alkalischen Mitteln behandelt wird.

2. Verfahren nach Anspruch 1, **dadurch gekennzeichnet, daß** die genannte saure Lösung weitere Inhaltsstoffe, ausgewählt aus den Hydrotropen, den tensidischen Verbindungen sowie komplexbildenden Komponenten enthält.

3. Verfahren nach Anspruch 2, **dadurch gekennzeichnet, daß** die genannte saure Lösung hergestellt wird durch Mischen einer wäßrigen Lösung mit einem pH kleiner 6, enthaltend eine organische Persäure sowie Fettsäure, mit einem Waschmittel, dessen pH Wert in 1%iger wäßriger Lösung zwischen 9 und 13 liegt und Inhaltsstoffe, ausgewählt aus den Hydrotropen, den tensidischen Verbindungen sowie komplexbildenden Komponenten und gegebenenfalls Fettsäuren enthält.

4. Verfahren nach einem oder mehreren der Ansprüche 1 bis 3, **dadurch gekennzeichnet, daß** der pH-Wert der Lösung bei der genannten sauren Behandlung zwischen 4 und 6 liegt und beim sich direkt anschließenden Verfahrensschritt der pH-Wert der dann vorliegenden Lösung zwischen 7 und 9 beträgt.

5. Verfahren nach einem oder mehreren der Ansprüche 1 bis 4, **dadurch gekennzeichnet, daß** die Menge an erforderlichen alkalischen Mitteln in dem genannten sich anschließenden Verfahrensschritt über pH-Wert-Erfassung automatisch kontrolliert und gesteuert wird.

6. Verfahren nach einem oder mehreren der Ansprüche 1 bis 5, **dadurch gekennzeichnet, daß** die genannte saure Lösung erst abgelassen und danach die Wäsche in dem sich direkt anschließenden Verfahrensschritt mit alkalischen Mitteln behandelt wird.

7. Verfahren nach einem oder mehreren der Ansprüche 1 bis 5, **dadurch gekennzeichnet, daß** die genannte saure Lösung direkt mit den in dem sich anschließenden Verfahrensschritt eingesetzten alkalischen Mittel versetzt wird.

8. Verfahren nach einem oder mehreren der Ansprüche 1 bis 5, **dadurch gekennzeichnet, daß** bei dem Verfahren die Wäsche durch eine kontinuierlich arbeitende Mehrkammer-Waschmaschine fortbewegt wird, wobei der genannte saure Verfahrensschritt in einer Kammer erfolgt, die getrennt ist von einer unmittelbar oder mittelbar folgenden Kammer, in der der genannte alkalische Verfahrensschritt erfolgt.

9. Verfahren nach einem oder mehreren der Ansprüche 1 bis 8, **dadurch gekennzeichnet, daß** die genannte organische Persäure ausgewählt ist aus
d) den Persäuren oder Salzen von Persäuren mit der allgemeinen Formel I
R²-O₂C-(CH₂)ₓ-CO₃H (I)
worin R² Wasserstoff oder eine Alkylgruppe von 1 bis 4 Kohlenstoffatomen und x eine Zahl von 1 bis 4 ist, und/oder
e) den Phthalimido-Percarbonsäuren (II), worin der Percarbonsäure-Anteil 1 bis 18 Kohlenstoffatome enthält, und/oder
f) den Persäuren mit der allgemeinen Formel (III)
R¹-CO₃H (III)
worin R¹ eine Alkyl- oder Alkenylgruppe mit 1 bis 18 Kohlenstoffatomen ist.

10. Verfahren nach einem oder mehreren der Ansprüche 1 bis 9, **dadurch gekennzeichnet, daß** der Persäure-Anteil in der genannten sauren Lösung, bezogen auf die gesamte saure Lösung 0,0001 bis 2 Gew.% beträgt.

11. Verfahren nach Anspruch 10, **dadurch gekennzeichnet, daß** in der genannten sauren Lösung bezogen auf die gesamte saure Lösung zusätzlich 0,0005 bis 2 Gew.% Wasserstoffperoxid vorliegen.
